# EUROPEAN PATENT APPLICATION

(11) **EP 2 982 657 A1**
(43) Date of publication of application: **10.02.2016**
(21) Application number: 14778207.2
(22) Date of filing: 03.04.2014
(51) Int. Cl.: C03C 27/06, C03C 3/085, C03C 3/087, C03C 21/00, E06B 3/66

(54) **DOUBLE GLAZING FOR BUILDING WINDOW**

(30) Priority: 03.04.2013 JP 2013077556
(71) Applicant: Asahi Glass Company, Limited, Tokyo 100-8405 (JP)
(72) Inventor: KIKUCHI, Satoshi, Tokyo 100-8405 (JP); KOJIMA, Hiroshi, Tokyo 100-8405 (JP); ICHIYAMA, Yasuko, Tokyo 100-8405 (JP); ISHIDA, Hikaru, Tokyo 100-8405 (JP)
(74) Representative: Müller-Boré & Partner Patentanwälte PartG mbB
(86) International application number: PCT/JP2014/059880
(87) International publication number: WO 2014/163158

(57) **Abstract**

To provide multiple glazing for a building window, which is thin in thickness and light in weight and which is capable of suppressing scattering of fragments as much as possible when broken.

In multiple glazing 10 for a building window, a glass sheet 20 arranged on the indoor side has first and second main surfaces 21a, 21b, and an edge 22, and has a surface compression stress formed at the main surfaces 21 a, 21 b by chemical tempering and has a tensile stress formed inside. The glass sheet 20 has a sheet thickness of from 1.0 to 2.5 mm; the value of the surface compression stress is from 400 to 900 MPa; the value of the tensile stress is from 1 to 25 MPa; and the thickness in the sheet thickness direction of the compression stress layer at the main surfaces 21 a, 21 b is from 7 to 25 µm.

## Description

### TECHNICAL FIELD

The present invention relates to multiple glazing for a building window, particularly to multiple glazing for a building window employing chemically tempered glass sheets.

### BACKGROUND ART

Double glazing is widely used as an energy-saving window to reduce the load for indoor air conditioning in a building. Double glazing is usually one having a pair of glass sheets held via an air space by a spacer is placed for the entire periphery of the glass sheets. By the presence of the air space, heat transfer between indoor and outdoor can be reduced when such double glazing is installed as a sash, whereby the load for air conditioning can be reduced.

In order to further reduce the heat transfer between indoor and outdoor, multiple glazing has also been proposed which employs three or more glass sheets to form two or more air spaces (see Patent Document 1).

Further, Patent Document 1 teaches use of tempered glass having chemical tempering applied to a glass sheet.

### PRIOR ART DOCUMENT

### PATENT DOCUMENT

Patent Document 1: JP-A-2010-6684

### DISCLOSURE OF INVENTION

### TECHNICAL PROBLEM

By the way, if the thickness of a glass sheet is reduced, the strength is usually reduced. As a typical phenomenon, if the thickness of a glass sheet is reduced, the stiffness of the glass sheet itself tends to be reduced, and the glass sheet tends to be flexible. If the glass sheet becomes too flexible, a tensile stress is likely to be formed on both sides of the glass sheet when it is curved to have a convex shape, and if such a tensile stress exceeds the fracture stress, the glass sheet undergoes breakage.

Therefore, in order to provide resistance against the tensile stress to be formed at the convex surface side, it is conceivable to provide tempered glass having a compression stress preliminarily formed on the surface of a glass sheet. On the other hand, it may be practically difficult to physically tempering a glass sheet having a less thickness, typically a glass sheet having a thickness of at most 2.5 mm. The reason is as follows. The physical tempering is one utilizing a temperature difference between the surface and the interior of the glass sheet, caused by heating the glass sheet, followed by quenching. A considerably large cooling ability is industrially required for such quenching to form a desired temperature difference in the glass sheet having a thickness of at most 2.5 mm. Therefore, it may be said that chemical tempering is suitable for tempering treatment of a glass sheet having a thickness of at most 2.5 mm.

When a thin, chemically tempered glass sheet is very much bent by a collision of an object, if the impact exceeds a certain level, the glass sheet undergoes breakage. As a result, broken glass fragments will scatter in a direction opposite to the defected direction by the backlash in a direction opposite to the deflected direction and by a release of internal energy attributable to the tensile stress remaining inside of the glass sheet. That is, in a case where the glass sheet undergoes breakage upon collision of an object to the glass sheet at the indoor side of a building, scattering of broken fragments at the indoor side is worried.

Therefore, it is desired to suppress scattering of fragments as far as possible at the time of breakage of a chemically tempered glass. However, in Patent Document 1, there is no specific disclosure as to how much chemical tempering is required for glass sheets when they are to be used as multiple glazing.

Further, the total weight of glass sheets in Patent Document 1 becomes as heavy as 30 kg/m² = 12.1 (actually measured value) × 2.5 by calculation when the thinnest glass is used (total thickness: 18 mm).

The present invention is to provide multiple glazing for a building window, which is thin in thickness and light in weight, and which is capable of suppressing scattering of fragments as much as possible when broken.

### SOLUTION TO PROBLEM

The present invention provides multiple glazing for a building window, comprising a plurality of glass sheets and a spacer is placed for the periphery edges of the plurality of glass sheets to form an air space between adjacent glass sheets, wherein among the plurality of glass sheets, a glass sheet arranged on the indoor side has first and second main surfaces and an edge present between the first and second main surfaces, and is a glass sheet having a surface compression stress formed at both of the main surfaces by chemical tempering and having a tensile stress formed inside; said glass sheet has a sheet thickness of from 1.0 to 2.5 mm; the value of said surface compression stress formed at both of the main surfaces is from 400 to 900 MPa; the value of said tensile stress is from 1 to 25 MPa; and the thickness in the sheet thickness direction of the compression stress layer at both of the main surfaces is from 7 to 25 µm.

Further, the present invention provides multiple glazing for a building window, comprising first, second and third glass sheets, and first and second spacers is placed for the periphery edges of the respective glass sheets to form a first air space between the first and second glass sheets, and a second air space between the second and third glass sheets, wherein the first glass sheet arranged on the indoor side has first and second main surfaces and an edge present between the first and second main surfaces, and is a glass sheet having a surface compression stress formed at both of the main surfaces by chemical tempering and having a tensile stress formed inside; said glass sheet has a sheet thickness of from 1.0 to 2.5 mm; the value of said surface compression stress formed at both of the main surfaces is from 400 to 900 MPa; the value of said tensile stress is from 1 to 25 MPa; and the thickness in the sheet thickness direction of the compression stress layer at both of the main surfaces is from 7 to 25 µm.

### ADVANTAGEOUS EFFECTS OF INVENTION

According to the present invention, it is possible to obtain multiple glazing for a building window, which is thin in thickness, and which is capable of suppressing scattering of fragments as much as possible when broken.

### BRIEF DESCRIPTION OF DRAWINGS

Fig. 1 is a partial cross-sectional view illustrating an example of the multiple glazing for a building window of the present invention.
Fig. 2 is a perspective view illustrating a glass sheet to be used for the multiple glazing for a building window shown in Fig. 1.

### DESCRIPTION OF EMBODIMENTS

Now, an example of the multiple glazing for a building window of the present invention will be described with reference to the drawings.

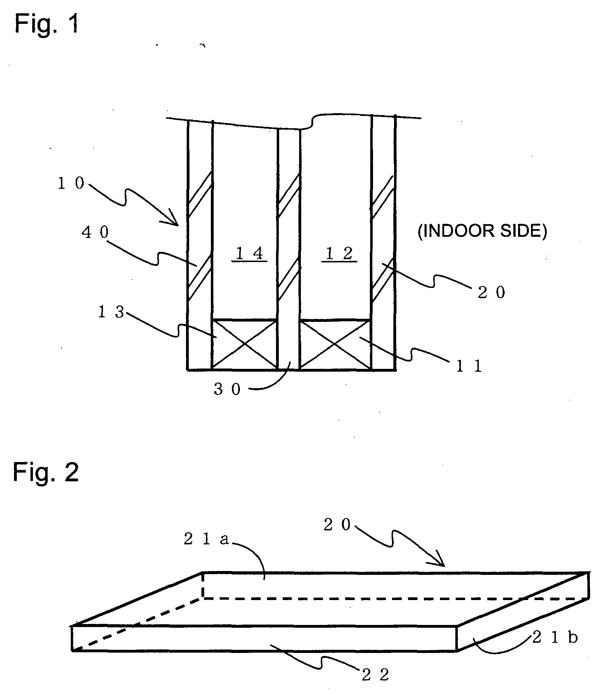

Fig. 1 is a partial cross-sectional view illustrating an example of the multiple glazing for a building window of the present invention. The multiple glazing 10 for a building window comprises a first glass sheet 20 (a glass sheet on the indoor side), a second glass sheet 30, a third glass sheet 40 (a glass sheet on the outdoor side), a first air space 12 formed between the first and second glass sheets, a second air space 14 formed between the second and third glass sheets, a first spacer 11 and a second spacer 13. The first spacer 11 is placed for the entire periphery between the first glass sheet 20 and the second glass sheet 30. The second spacer 13 is placed for the entire periphery between the second glass sheet 30 and the third glass sheet 40. Thus, the first air space 12 is provided between the first glass sheet 20 and the second glass sheet 30, and the second air space 14 is provided between the second glass sheet 30 and the third glass sheet 40.

Fig. 2 is a perspective view illustrating the glass sheet 20 to be used for the multiple glazing 10 for a building window shown in Fig. 1. The glass sheet 20 is one to be arranged on the indoor side of the multiple glazing 10 for a building window shown in Fig. 1, and, as shown in Fig. 2, has a first main surface 21 a and a second main surface 21 b, as well as an edge 22 present between the main surfaces 21 a and 21 b. The sheet thickness t of this glass sheet 20 is from 1.0 to 2.5 mm. The glass sheet 20 is a glass sheet subjected to chemical tempering to have compression stress layers of from 7 to 25 µm in the sheet thickness direction at the main surfaces 21a and 21b. The compression stress values at the main surfaces 21a and 21b are from 400 to 900 MPa, respectively. The value of the tensile stress formed inside of the glass sheet 20 is from 1 to 25 MPa.

In the present invention, the glass sheet 20 to be arranged on the indoor side is preferably such that the sheet thickness is from 1.1 to 2.2 mm, the values of the surface compression stresses at both main surfaces are from 600 to 850 MPa, the value of the tensile stress is from 4 to 20 MPa, and the thicknesses in the sheet thickness direction of the compression stress layers at both main surfaces are from 15 to 25 µm. It is thereby possible to suppress scattering of fragments to such an extent that the scattering distance of fragments is comparable to one when a usual double glazing is subjected to a pendulum impact test. Further, from such a viewpoint that the scattering can be prevented, the glass sheet 20 to be arranged on the indoor side is preferably such that the sheet thickness is from 1.2 to 2.1 mm, the values of the surface compression stresses at both main surfaces are from 650 to 800 MPa, the value of the tensile stress is from 5 to 17 MPa, and the thicknesses in the sheet thickness direction of the compression stress layers at both main surfaces are from 18 to 25 µm.

As the glass sheet in the present invention, the area of each main surface is effectively at least 5,000 cm², more effectively at least 10,000 cm², in order to exhibit the effects of the present invention. That is, if the area of multiple glazing for a building window increases, the absolute value of deflection is likely to increase, and if the deflection increases, the scattering distance of fragments at the time of the pendulum impact test tends to increase. Therefore, for multiple glazing having a large area, it is effective to use, as in the present invention, a glass sheet subjected to chemical tempering to minimize the energy accumulated inside as far as possible and to have desired compression stresses imparted to the main surfaces.

In such multiple glazing, when it is subjected to a pendulum impact test in accordance with JIS R3206 from the side of the glass sheet 20 arranged on the indoor side, if it does not break at a drop height of 10 cm, and if, when it breaks at a drop height of at least 20 cm, the scattering distance of fragments exceeding 0.15 g is at most 4.5 m, it may be regarded as multiple glazing which is comparable to a usual double glazing with the scattering distance suppressed.

In the present invention, the glass sheet to be arranged on the indoor side may have a compression stress layer formed also at the edge in addition to at the main surfaces. In a case where a glass plate is cut into a desired shape after chemical tempering, the edge may not have a compression stress layer. In order to adjust the size and shape to various sash sizes and shapes of buildings, it is preferred to cut a glass plate into a desired shape after chemical tempering and use it as a glass sheet having no compression stress layer formed at the edge. Further, it is also preferred to have this edge subjected to protective treatment such as chemical treatment or covering with a coating film.

In the present invention, the compression stress to be formed in a glass sheet to be arranged on the indoor side may be uniformly formed in the main surface direction of the glass sheet or may have a distribution in the plane. By the above chemical tempering, a compression stress is obtainable substantially uniformly except for treatment unevenness. Therefore, in measurements of various values relating to the compression stress, the center of the main surface (in a case where the glass sheet is rectangular, a point where diagonal lines intersect each other, and in a case where it is not rectangular, a similar point) may be used as a representative point.

The method for chemical tempering to obtain a glass sheet in the present invention is not particularly limited so long as it is one capable of ion-exchanging ions having a small ion radius (such as Na ions) at the glass surface with ions having a large ion radius (such as K ions), and, for example, a method of dipping glass in a heated potassium nitrate molten salt, may be mentioned. Here, in the present invention, a potassium nitrate molten salt or a potassium nitrate salt includes not only KNO₃ but also one containing KNO₃ and at most 10 mass% of NaNO₃.

The chemical tempering conditions to form a compression stress layer having a desired surface compression stress in glass, may vary also depending upon the thickness of a glass plate, etc., but it is typical to dip a glass substrate in a potassium nitrate molten salt of from 350 to 550°C for from 2 to 20 hours. From the economical viewpoint, it is preferred to conduct the dipping under conditions of from 350 to 500°C for from 2 to 16 hours, and a more preferred dipping time is from 2 to 10 hours.

The process for producing a glass sheet in the present invention is not particularly limited, but, for example, various starting materials may be mixed in suitable amounts, heated and melted at from about 1,400 to 1,800°C, followed by homogenization by e.g. defoaming, stirring, etc., then by molding into a plate form by e.g. a well-known float process, a downdraw method, a press method, etc., and then by annealing, followed by cutting into a desired size to obtain a glass sheet.

The glass transition point Tg of glass of at least a glass sheet to be arranged on the indoor side in the present invention, is preferably at least 400°C, whereby loosening of the surface compression stress during ion exchange can be prevented. Tg is more preferably at least 550°C.

The temperature T2 at which the viscosity of glass of at least a glass sheet to be arranged on the indoor side in the present invention, becomes to be 10² dPa·s, is preferably at most 1,800°C, more preferably at most 1,750°C.

The temperature T4 at which the viscosity of glass in the present invention, becomes to be 10⁴ dPa·s, is preferably at most 1,350°C.

The specific gravity p of glass of at least a glass sheet to be arranged on the indoor side in the present invention, is preferably from 2.37 to 2.55.

The Young's modulus E of glass of at least a glass sheet to be arranged on the indoor side in the present invention, is preferably at least 65 GPa, whereby the stiffness and fracture strength of glass as a cover glass will be sufficient.

The Poisson's ratio σ of glass of at least a glass sheet to be arranged on the indoor side in the present invention, is preferably at most 0.25, whereby the scratch resistance of glass, particularly the scratch resistance after use for a long period of time, will be sufficient.

Needless to say, a glass sheet to be arranged on the indoor side in the present invention may be one prepared by chemically tempering a glass sheet already cut into a desired size, or one which is preliminarily chemically tempered and then cut into a desired size.

Here, the chemically tempered glass sheet in the present invention comprises, as represented by mol percentage based on oxides, from 56 to 75% of SiO₂, from 1 to 20% of Al₂O₃, from 8 to 22% of Na₂O, from 0 to 10% of K₂O, from 0 to 14% of MgO, from 0 to 5% of ZrO₂, and from 0 to 10% of CaO. Further, it is more preferably a chemically tempered glass comprising from 56 to 75% of SiO₂, from 5 to 20% of Al₂O₃, from 8 to 22% of Na₂O, from 0 to 10% of K₂O, from 0 to 14% of MgO, from 0 to 5% of ZrO₂, and from 0 to 5% of CaO. Hereinafter, the percentage representation shows a content as represented by mol percentage, unless otherwise specified.

Now, the reason for defining the glass composition within the above-identified ranges in the chemically tempered glass in this embodiment, will be explained as follows.

SiO₂ is known as a component to form a network structure in the fine glass structure and is a main component to constitute glass. The content of SiO₂ is at least 56%, preferably at least 60%, more preferably at least 63%, further preferably at least 65%. Further, the content of SiO₂ is at most 75%, preferably at most 73%, further preferably at most 71 %. When the content of SiO₂ is at least 56%, such is advantageous from the viewpoint of the stability and weather resistance as glass. On the other hand, when the content of SiO₂ is at most 75%, such is advantageous from the viewpoint of the melting efficiency and moldability.

Al₂O₃ has a function to improve the ion exchange performance in chemical tempering and particularly has a large function to improve the surface compression stress (CS). It is known as a component to improve the weather resistance of glass. Further, it has a function to prevent tin from penetrating from the bottom surface during float processing. The content of Al₂O₃ is at least 1 %, preferably at least 3%, more preferably at least 5%. Further, the content of Al₂O₃ is at most 20%, preferably at most 17%, more preferably at most 12%, further preferably at most 10%, particularly preferably at most 7%. When the content of Al₂O₃ is at least 1 %, a desired CS is obtainable by ion exchange, and an effect to prevent penetration of tin is obtainable. On the other hand, when the content of Al₂O₃ is at most 20%, the devitrification temperature will not rise so much even if the viscosity of glass is high, such being advantageous from the viewpoint of the melting and molding in the soda lime glass production line.

The total content of SiO₂ and Al₂O₃, i.e. SiO₂ + Al₂O₃, is preferably at most 80%.

If it exceeds 80%, the viscosity of glass at a high temperature increases, whereby melting tends to be difficult. It is more preferably at most 79%, further preferably at most 78%. Further, SiO₂ + Al₂O₃ is preferably at least 70%. If it is less than 70%, cracking resistance tends to be low when an indentation is imparted, and it is more preferably at least 72%.

Na₂O is an essential component to form a surface compression stress layer by ion exchange, and has a function to deepen the compression stress depth (DOL). Further, it is a component to lower the high temperature viscosity and devitrification temperature of glass and to improve the melting property and moldability of glass. The content of Na₂O is at least 8%, preferably at least 12%, more preferably at least 13%. Further, the content of Na₂O is at most 22%, preferably at most 20%, more preferably at most 16%. When the content of Na₂O is at least 8%, it is possible to form a desired surface compression stress layer by ion exchange. On the other hand, when the content of Na₂O is at most 22%, sufficient weather resistance is obtainable.

K₂O is not essential, but may be contained as it has an effect to increase the ion exchange rate and to deepen DOL. On the other hand, if K₂O becomes too much, no adequate CS tends to be obtainable. In a case where K₂O is contained, it is preferably at most 10%, more preferably at most 8%, further preferably at most 6%. When the content of K₂O is at most 10%, sufficient CS is obtainable.

MgO is not essential, but is a component to stabilize glass. The content of MgO is preferably at least 2%, more preferably at least 3%, further preferably at least 3.6%. Further, the content of MgO is at most 14%, preferably at most 8%, more preferably at most 6%. When the content of MgO is at least 2%, the chemical resistance of glass will be good, the melting property at a high temperature will be good, and devitrification tends to be less likely to occur. On the other hand, when the content of MgO is at most 14%, the characteristic of being less susceptible to devitrification will be maintained and a sufficient ion exchange rate will be obtainable.

ZrO₂ is not essential, but is generally known to have a function to increase the surface compression stress in chemical tempering. However, even if a small amount of ZrO₂ is incorporated, its effect is not large as compared with the increased costs. Therefore, an optional proportion of ZrO₂ may be incorporated within a range permitted by the costs. When incorporated, it is preferably at most 5%.

CaO is not essential, but is a component to stabilize glass. CaO tends to impair exchange of alkali ions, and therefore, especially when it is desired to increase DOL, its content should preferably be reduced, or it should preferably not be contained. On the other hand, in order to improve the chemical resistance, its content is preferably at least 2%, more preferably at least 4%, further preferably at least 6%. In a case where CaO is contained, its amount is at most 10%, preferably at most 9%, more preferably at most 8.2%. When the content of CaO is at most 10%, a sufficient ion exchange rate will be maintained, and a desired DOL will be obtainable.

SrO is not essential, but may be contained for the purpose of lowering the high temperature viscosity of glass and lowering the devitrification temperature. SrO has a function to lower the ion exchange efficiency, and therefore, should better be not contained, especially when it is desired to increase DOL. In a case where it is contained, the amount of SrO is preferably at most 3%, more preferably at most 2%, further preferably at most 1 %.

BaO is not essential, but may be contained for the purpose of lowering the high temperature viscosity of glass and lowering the devitrification temperature. BaO has a function to increase the specific gravity of glass and therefore, should better be not contained in a case where weight reduction is desired. In a case where it is contained, the amount of BaO is preferably at most 3%, more preferably at most 2%, further preferably at most 1 %.

TiO₂ is present in natural raw materials in many cases and is known to be a yellow coloring source. The content of TiO₂ is preferably at most 0.3%, more preferably at most 0.2%, further preferably at most 0.1%. If the content of TiO₂ exceeds 0.3%, glass tends to be yellowed.

In addition, the glass may optionally contain, as a clarifier in a melt of glass, a chloride, a fluoride, etc. The glass of the present invention is basically composed of the above-described components, but may contain other components within a range not to impair the object of the present invention. In a case where such other components are contained, the total content of such other components is preferably at most 5%, more preferably at most 3%, typically at most 1 %. Such other components will be described below just as exemplification.

ZnO may be contained, for example, in an amount of up to 2% in order to improve the melting property of glass at a high temperature. However, in the production by a float process, it may be reduced in the float bath to be product defects, and therefore, it should better be not contained.

B₂O₃ may be contained in an amount within a range of less than 1 % in order to improve the melting property at a high temperature or the glass strength. Usually if B₂O₃ is contained together with an alkali component such as Na₂O or K₂O, sublimation tends to be vigorous thereby to remarkably erode bricks, and therefore, B₂O₃ should better be substantially not contained.

Li₂O is a component which is likely to lower the strain point thereby to cause the stress relaxation and which thereby makes it difficult to obtain a stabilized surface compression stress layer, and therefore is preferably not contained, and even when contained, its content is preferably less than 1 %, more preferably at most 0.05%, particularly preferably less than 0.01%.

As the spacer in the present invention, a well-known spacer may be used. For example, a spacer main body prepared by forming an aluminum strip into a cylindrical shape and having a desiccant such as zeolite put therein, may be disposed between glass sheets by means of a primary seal such as butyl rubber and a second seal such as polysulfide rubber or silicone. Otherwise, a spacer made of a resin and having a desiccant incorporated, may be used.

Glass sheets in the present invention may be provided with various types of functional coatings. Typically, an indoor side glass sheet having a silver-type thin film formed on the surface on the air space side to impart a low emissivity, may be mentioned. As another example, irrespective of indoor or outdoor, it is possible to optionally provide a heat reflecting film or a hydrophilic thin film.

A glass sheet to be used in the multiple glazing of the present invention may be a single plate glass by itself, or may mean a laminated glass having two or more glass plates laminated via an inter-layer of e.g. polyvinylbutyral or ethylene/vinyl acetate.

In the air spaces in the present invention, an inert gas may be filled. The thickness of each air space is preferably from 6 to 16 mm in order to obtain sufficient heat-insulating and sound-insulating properties as multiple glazing. Further, for the following reason, it is preferred that the thicknesses of the respective air spaces are different. The sound-insulating property of an object usually depends on the mass of the object. Like in the multiple glazing of the present invention, if the sheet thicknesses of glass sheets to be used, are reduced, a decrease in the sound-insulating properties is worried. Here, it is possible to improve the sound-insulating property by differentiating the thicknesses of a plurality of air spaces which are in parallel in a cross-sectional view.

Fig. 1 is an example of multiple glazing 10 comprising three glass sheets 20, 30 and 40 and two air spaces 12 and 14, but the multiple glazing may be one comprising four or more glass sheets and air spaces smaller by one in number than the sheets.

### EXAMPLES

Multiple glazing for a building window was prepared to have constructions as shown in Tables 1 and 2. In Tables 1 and 2, L and S represent types of glass sheets, i.e. "L" represents LEOFLEX (registered trade mark) manufactured by Asahi Glass Co., Ltd., and "S" represents soda lime silica glass. The numeral in brackets ( ) following the type shows the thickness (unit: mm) of such a glass sheet. Likewise, the numeral in the column for air space shows the thickness (unit: mm) of the air space. The external dimensions of these glass sheets are all 700 (mm) × 1,140 (mm). Further, in Tables 1 and 2, "CS" shows the surface compression stress value (unit: MPa), "DOL" shows the depth of the compression stress layer (i.e. the depth in the sheet thickness direction of the compression stress layer at the main surface) (unit: µm), and "CT" shows the value of the tensile stress (unit: MPa).

Here, such glass sheets are chemically tempered glass comprising, as represented by mol percentage based on oxides, from 56 to 75% of SiO₂, from 1 to 20% of Al₂O₃, from 8 to 22% of Na₂O, from 0 to 10% of K₂O, from 0 to 14% of MgO, from 0 to 5% of ZrO₂, and from 0 to 10% of CaO.

In Tables 1 and 2, in each column for glass sheet, notations (1) "Not chamfered", (2) "Round chamfered #400" and (3) "Round chamfered #800" respectively show that after the glass sheet was cut into the prescribed size after chemical tempering, (1) the glass sheet was used as it was without chamfering, (2) the edge was round-chamfered by No. 400 grinding stone, and (3) the edge was round-chambered by No. 800 grinding stone. Further, each chemically tempered glass sheet is one adjusted to have the prescribed tempered physical properties imparted. The values for the tempered physical properties imparted by the adjustment, were obtained by measuring the surface compression stress CS (unit: µm) at the main surface and the thickness DOL in the sheet thickness direction of the compression stress layer at the main surface by means of a surface stress meter FSM-6000 manufactured by Orihara Manufacturing Co., Ltd. and calculating the internal tensile stress CT (unit: MPa). Further, the reference symbols for glass sheet and air space in Tables 1 and 2 are the same as the reference symbols used in Fig. 1.

**[Table 1]**

| Construction Example | Glass sheet 20 | Air space 12 | Glass sheet 30 | Air space 14 | Glass sheet 40 |
|---|---|---|---|---|---|
| 1 | Chemically tempered L (1.1) "Not chamfered" | 10 | Chemically tempered L (1.1) "Not chamfered" | 10 | Chemically tempered L (1.1) "Not chamfered" |
| | CS: 800 | | CS: 800 | | CS: 800 |
| | DOL: 20 | | DOL: 20 | | DOL: 20 |
| | CT: 15 | | CT: 15 | | CT: 15 |
| 2 | Chemically tempered L (1.1) "Round chamfered #400" | 10 | Chemically tempered L (1.1) "Round chamfered #400" | 10 | Chemically tempered L (1.1) "Round chamfered #400" |
| | CS: 800 | | CS: 800 | | CS: 800 |
| | DOL: 20 | | DOL: 20 | | DOL: 20 |
| | CT: 15 | | CT: 15 | | CT: 15 |
| 3 | Chemically tempered L (1.1) "Round chamfered #800" | 10 | Chemically tempered L (1.1) "Round chamfered #800" | 10 | Chemically tempered L (1.1) "Round chamfered #800" |
| | CS: 800 | | CS: 800 | | CS: 800 |
| | DOL: 20 | | DOL: 20 | | DOL: 20 |
| | CT: 15 | | CT: 15 | | CT: 15 |
| 4 | Chemically tempered L (1.3) "Not chamfered" | 10 | Not chemically tempered L (1.1) "Not chamfered" | 10 | Not chemically tempered S (3.0) "Not chamfered" |
| | CS: 800 | | | | |
| | DOL: 20 | | | | |
| | CT: 15 | | | | |
| 5 | Chemically tempered L (1.3) "Not chamfered" | 10 | Chemically tempered L (1.3) "Not chamfered" | 9 | Chemically tempered L (1.3) "Not chamfered" |
| | CS: 800 | | CS: 800 | | CS: 800 |
| | DOL: 20 | | DOL: 20 | | DOL: 20 |
| | CT: 15 | | CT: 15 | | CT: 15 |

**[Table 2]**

| | | | | | |
|---|---|---|---|---|---|
| 6 | Chemically tempered L (2.0) "Round chamfered #400" | 10 | Not chemically tempered L (1.1) "Not chamfered" | 10 | Not chemically tempered S (3.0) "Not chamfered" |
| | CS: 800 | | | | |
| | DOL: 20 | | | | |
| | CT: 15 | | | | |
| 7 | Chemically tempered L (2.0) "Not chamfered" | 9 | Chemically tempered L (2.0) "Not chamfered" | 8 | Chemically tempered L (2.0) "Not chamfered" |
| | CS: 800 | | CS: 800 | | CS: 800 |
| | DOL: 20 | | DOL: 20 | | DOL: 20 |
| | CT: 15 | | CT: 15 | | CT: 15 |
| 8 | Chemically tempered S (1.1) "Not chamfered" | 10 | Chemically tempered S (1.1) "Not chamfered" | 10 | Chemically tempered S (1.1) "Not chamfered" |
| | CS: 560 | | CS: 560 | | CS: 560 |
| | DOL: 13 | | DOL: 13 | | DOL: 13 |
| | CT: 7 | | CT: 7 | | CT: 7 |
| 9 | Chemically tempered S (1.1) "Round chamfered #400" | 10 | Chemically tempered S (1.1) "Round chamfered #400" | 10 | Chemically tempered S (1.1) "Round chamfered #400" |
| | CS: 560 | | CS: 560 | | CS: 560 |
| | DOL: 13 | | DOL: 13 | | DOL: 13 |
| | CT: 7 | | CT: 7 | | CT: 7 |
| 10 | Chemically tempered S (1.1) "Round chamfered #800" | 10 | Chemically tempered S (1.1) "Round chamfered #800" | 10 | Chemically tempered S (1.1) "Round chamfered #800" |
| | CS: 560 | | CS: 560 | | CS: 560 |
| | DOL: 13 | | DOL: 13 | | DOL: 13 |
| | CT: 7 | | CT: 7 | | CT: 7 |
| 11 | Not chemically tempered L (1.1) "Not chamfered" | 10 | Not chemically tempered L (1.1) "Not chamfered" | 10 | Not chemically tempered L (1.1) "Not chamfered" |
| 12 | Not chemically tempered L (1.1) "Round chamfered #400" | 10 | Not chemically tempered L (1.1) "Round chamfered #400" | 10 | Not chemically tempered L (1.1) "Round chamfered #400" |
| 13 | Not chemically tempered S (3.0) "Not chamfered" | 12 | Not chemically tempered S (3.0) "Not chamfered" | | |

Multiple glazing in each Construction Example shown in Tables 1 and 2 was subjected to a pendulum impact test in accordance with JIS R3206: 1997, to let the impact bag collide with the glass sheet (the glass sheet identified by reference symbol 20 in Fig. 1) arranged on the indoor side. The results are shown in Table 3. In Table 3, "Drop height" represents the drop height (unit: cm) of the impact bag when the glass sheet underwent breakage by the pendulum impact test. Likewise, "Maximum scattering distance" represents the maximum scattering distance (unit: m) of a fragment scattered in the test. Likewise, "Weight of fragment at maximum scattering distance (g)" represents the maximum weight (unit: g) of a fragment scattered at the above maximum scattering distance. Further, "Scattering distance of fragment exceeding 0.15 g" represents the maximum scattering distance (unit: m) of a fragment exceeding 0.15 g. Further, for ease of reference, the strength physical properties (surface compression stress value "CS" and tensile stress value "CT"), the compression stress depth "DOL" and the sheet thickness t, of each glass sheet to be arranged on the indoor side, in the chemically tempered case, are shown in Table 3 (units are the same as above).

**[Table 3]**

| | Construction Example | CS | DOL | CT | t | Drop height at breakage (cm) | Maximum scattering distance (m) | Weight of fragment at maximum scattering distance (g) | Scattering distance of fragment exceeding 0.15 g (m) |
|---|---|---|---|---|---|---|---|---|---|
| Ex. 1 | 1 | 800 | 20 | 15 | 1.1 | 20 | 5.5 | 0.09 | 3.0 |
| Ex. 2 | 1 | 800 | 20 | 15 | 1.1 | 20 | 4.0 | 0.04 | 3.0 |
| Ex. 3 | 2 | 800 | 20 | 15 | 1.1 | 30 | 3.5 | 0.07 | 2.5 |
| Ex. 4 | 2 | 800 | 20 | 15 | 1.1 | 30 | 4.0 | 0.03 | 3.0 |
| Ex. 5 | 2 | 800 | 20 | 15 | 1.1 | 20 | 3.0 | 0.38 | 3.0 |
| Ex. 6 | 2 | 800 | 20 | 15 | 1.1 | 30 | - | - | - |
| Ex. 7 | 3 | 800 | 20 | 15 | 1.1 | 30 | 3.0 | 0.33 | 3.0 |
| Ex. 8 | 3 | 800 | 20 | 15 | 1.1 | 20 | 3.5 | 0.23 | 3.5 |
| Ex. 9 | 3 | 800 | 20 | 15 | 1.1 | 40 | 4.5 | 0.23 | 4.5 |
| Ex. 10 | 4 | 800 | 20 | 10 | 1.3 | 48 | 6.5 | 0.06 | 5.5 |
| Ex. 11 | 4 | 800 | 20 | 10 | 1.3 | 30 | 4.0 | 0.06 | 3.0 |
| Ex. 12 | 4 | 800 | 20 | 10 | 1.3 | 20 | 3.5 | 0.07 | 2.0 |
| Ex. 13 | 4 | 800 | 20 | 10 | 1.3 | 30 | - | - | - |
| Ex. 14 | 5 | 800 | 20 | 10 | 1.3 | 38 | 4.0 | 0.06 | 3.5 |
| Ex. 15 | 5 | 800 | 20 | 10 | 1.3 | 20 | 3.5 | 0.03 | 2.5 |
| Ex. 16 | 5 | 800 | 20 | 10 | 1.3 | 48 | 5.5 | 0.07 | 4.0 |
| Ex. 17 | 6 | 800 | 20 | 8 | 2.0 | 61 | 4.0 | 0.13 | 2.5 |
| Ex. 18 | 6 | 800 | 20 | 8 | 2.0 | 77 | 5.5 | 0.39 | 5.5 |
| Ex. 19 | 6 | 800 | 20 | 8 | 2.0 | 61 | 5.5 | 0.12 | 4.5 |
| Ex. 20 | 6 | 800 | 20 | 8 | 2.0 | 48 | - | - | - |
| Ex. 21 | 7 | 800 | 20 | 8 | 2.0 | 30 | 3.0 | 0.18 | 3.0 |
| Ex. 22 | 7 | 800 | 20 | 8 | 2.0 | 20 | 2.5 | 0.03 | At most 2.5 |
| Ex. 23 | 7 | 800 | 20 | 8 | 2.0 | 38 | 3.5 | 0.52 | 3.5 |
| Ex. 24 | 8 | 560 | 13 | 7 | 1.1 | 20 | 4.5 | 0.14 | 3.5 |
| Ex. 25 | 8 | 560 | 13 | 7 | 1.1 | 20 | 4.5 | 0.08 | 3.5 |
| Ex. 26 | 9 | 560 | 13 | 7 | 1.1 | 10 | 2.5 | 0.33 | 2.5 |
| Ex. 27 | 9 | 560 | 13 | 7 | 1.1 | 20 | 3.0 | 0.28 | 3.0 |
| Ex. 28 | 9 | 560 | 13 | 7 | 1.1 | 10 | - | - | - |
| Ex. 29 | 10 | 560 | 13 | 7 | 1.1 | 30 | 4.5 | 0.18 | 4.5 |
| Ex. 30 | 10 | 560 | 13 | 7 | 1.1 | 20 | 3.5 | 1.42 | 3.5 |
| Ex. 31 | 10 | 560 | 13 | 7 | 1.1 | 10 | 2.5 | 0.16 | 2.5 |
| Ex. 32 | 10 | 560 | 13 | 7 | 1.1 | 20 | - | - | - |
| Ex. 33 | 11 | - | - | - | 1.1 | 10 | 3.5 | 0.05 | 2.5 |
| Ex. 34 | 11 | - | - | - | 1.1 | 10 | 2.5 | 0.32 | 2.5 |
| Ex. 35 | 12 | - | - | - | 1.1 | 10 | 4.0 | 0.12 | 3.5 |
| Ex. 36 | 12 | - | - | - | 1.1 | 10 | 4.5 | 0.13 | 3.5 |
| Ex. 37 | 13 | - | - | - | 3.0 | 48 | 3.0 | 0.36 | 3.0 |
| Ex. 38 | 13 | - | - | - | 3.0 | 30 | 3.5 | 0.03 | 2.5 |
| Ex. 39 | 13 | - | - | - | 3.0 | 30 | 3.0 | 0.11 | 2.5 |
| Ex. 40 | 13 | - | - | - | 3.0 | 61 | 4.5 | 0.15 | Less than 4.5 |
| Ex. 41 | 13 | - | - | - | 3.0 | 38 | 2.5 | 0.11 | At most 2.5 |

In Table 3, multiple glazing constructions in Ex. 1 to 32 are multiple glazing constructions in Examples of the present invention. Among the multiple glazing constructions in Ex. 1 to 32, multiple glazing constructions in Ex. 1, 2, 7 to 9, 14 to 16, 21 to 23 are multiple glazing constructions in preferred Examples of the present invention. Multiple glazing constructions in Ex. 33 to 36 are multiple glazing constructions in Comparative Examples. Ex. 37 to 41 relate to multiple glazing constructions in Reference Examples.

According to the multiple glazing constructions in Ex. 1 to 32, in the pendulum impact test in accordance with JIS R3206, glass sheets on the indoor side does not break at a drop height of 10 cm, or in the same constructions, many glass sheets on the indoor side does not break.

Now, the results in Table 3 will be described in detail. Here, chemically tempered glass sheets in Examples are ones cut after chemically tempered.

According to the multiple glazing constructions in Ex. 1 and 2, in the case of a drop height of 20 cm, the maximum scattering distance was 5.5 m, 4.0 m, and the maximum scattering distance of a fragment exceeding 0.15 g was 3.0 m. Thus, according to the multiple glazing constructions in Ex. 1 and 2, it was possible to suppress the scattering distance even by a glass sheet having a thickness of 1.1 mm.

According to the multiple glazing constructions in Ex. 3 to 6, in the case of a drop height of 20 cm, the maximum scattering distance was 3.0 m, and the maximum scattering distance of a fragment exceeding 0.15 g was 3.0 m. Further, in the case of a drop height of 30 cm, the maximum scattering distance was 4.0 m, and the maximum scattering distance of a fragment exceeding 0.15 g was 3.0 m. Thus, it was found that according to the multiple glazing constructions in Ex. 3 to 6, since the edge was round-chamfered by No. 400 grinding stone, it was possible to suppress the scattering distance even under a sever condition (drop height of 30 cm) even by a glass sheet having a thickness of 1.1 mm.

According to the multiple glazing constructions in Ex. 7 to 9, in the case of a drop height of 20 cm, the maximum scattering distance was 3.5 m, and the maximum scattering distance of a fragment exceeding 0.15 g was 3.5 m. Further, in the case of a drop height of 40 cm, the maximum scattering distance was 4.5 m, and the maximum scattering distance of a fragment exceeding 0.15 g was 4.5 m. Thus, it was found that according to the multiple glazing constructions in Ex. 7 to 9, since the edge was round-chamfered by No. 800 grinding stone, it was possible to suppress the scattering distance even under a sever condition (drop height of 40 cm) even by a glass sheet having a thickness of 1.1 mm.

According to the multiple glazing constructions in Ex. 10 to 13, in the case of a drop height of 20 cm, the maximum scattering distance was 3.5 m, and the maximum scattering distance of a fragment exceeding 0.15 g was 2.0 m. Further, in the case of a drop height of 48 cm, the maximum scattering distance was 6.5 m, and the maximum scattering distance of a fragment exceeding 0.15 g was 5.5 m. Thus, it was found that according to the multiple glazing constructions in Ex. 10 to 13, it was possible to suppress the scattering distance even under a sever condition (drop height of 48 cm) even by a glass sheet having a thickness of 1.3 mm.

According to the multiple glazing constructions in Ex. 14 to 16, in the case of a drop height of 20 cm, the maximum scattering distance was 3.5 m, and the maximum scattering distance of a fragment exceeding 0.15 g was 2.5 m. Further, in the case of a drop height of 48 cm, the maximum scattering distance was 5.5 m, and the maximum scattering distance of a fragment exceeding 0.15 g was 4.0 m. Thus, according to the multiple glazing constructions in Ex. 14 to 16, it was possible to suppress the scattering distance even under a sever condition (drop height of 48 cm) even by a glass sheet having a thickness of 1.3 mm.

According to the multiple glazing constructions in Ex. 17 to 20, in the case of a drop height of 61 cm, the maximum scattering distance was 5.5 m, and the maximum scattering distance of a fragment exceeding 0.15 g was 4.5 m. Further, in the case of a drop height of 77 cm, the maximum scattering distance was 5.5 m, and the maximum scattering distance of a fragment exceeding 0.15 g was 5.5 m. Thus, it was found that according to the multiple glazing constructions in Ex. 17 to 20, since the edge was round-chamfered by No. 400 grinding stone, it was possible to suppress the scattering distance even under a sever condition (drop height of 77 cm) even by a glass sheet having a thickness of 2.0 mm.

According to the multiple glazing constructions in Ex. 21 to 23, in the case of a drop height of 20 cm, the maximum scattering distance was 2.5 m, and the maximum scattering distance of a fragment exceeding 0.15 g was at most 2.5 m. Further, in the case of a drop height of 38 cm, the maximum scattering distance was 3.5 m, and the maximum scattering distance of a fragment exceeding 0.15 g was 3.5 m. Thus, according to the multiple glazing constructions in Ex. 21 to 23, it was possible to suppress the scattering distance even under a sever condition (drop height of 38 cm) even by a glass sheet having a thickness of 2.0 mm.

According to the multiple glazing constructions in Ex. 24 and 25, in the case of a drop height of 20 cm, the maximum scattering distance was 4.5 m, and the maximum scattering distance of a fragment exceeding 0.15 g was 3.5 m. Thus, it was found that according to the multiple glazing constructions in Ex. 24 and 25, since the edge was round-chamfered by No. 400 grinding stone, it was possible to suppress the scattering distance even by a glass sheet having a thickness of 1.1 mm.

According to the multiple glazing constructions in Ex. 26 to 28, in the case of a drop height of 20 cm, the maximum scattering distance was 3.0 m, and the maximum scattering distance of a fragment exceeding 0.15 g was 3.0 m. Thus, it was found that according to the multiple glazing constructions in Ex. 26 to 28, since the edge was round-chamfered by No. 800 grinding stone, it was possible to suppress the scattering distance even by a glass sheet having a thickness of 1.1 mm.

Here, the weight of glass in Construction Examples shown in Tables 1 and 2 will be described.

According to multiple glazing constructions in Construction Examples 1 to 3 and 8 to 12, the total weight of three sheets of glass was about 8.25 kg/m² = (1.1 + 1.1 + 1.1) × 2.5 (here, the numerical values in brackets represent the sheet thicknesses (mm), and the numerical value following them represents the specific gravity, the same applies hereinafter). Further, according to the multiple glazing construction in Construction Example 4, the total weight of three sheets of glass was about 13.5 kg/m² = (1.3 + 1.1 + 3.0) × 2.5. Further, according to the multiple glazing construction in Construction Example 5, the total weight of three sheets of glass was about 9.75 kg/m² = (1.3 + 1.3 + 1.3) × 2.5. Further, according to the multiple glazing construction in Construction Example 6, the total weight of three sheets of glass was about 15.25 kg/m² = (2.0 + 1.1 + 3.0) × 2.5. Further, according to the multiple glazing construction in Construction Example 7, the total weight of three sheets of glass was about 15 kg/m² = (2.0 + 2.0 + 2.0) × 2.5.

Further, as an index for the heat-insulating property of glass, a heat transmission coefficient (so-called U-value) is available. The U-value is the amount of heat transmitted per hour through 1 m² of glass, as represented by watt (W), when the temperature difference between inside and outside is 1°C. Here, the heat transmission coefficient (U-value) in Patent Document 1 is 1.8 W/m²·K even the smallest one.

On the other hand, in a case where chemically tempered thin glass sheets of the present invention (silver double-layered Low-E film-attached glass sheet 3 mm (glass sheet on the outdoor side) + argon gas-filled air space 15 mm + glass sheet 1.3 mm + argon gas-filled air space 15 mm + silver double-layered Low-E film-attached glass sheet 1.3 mm (glass sheet on the indoor side)) are used, it is possible to adjust the U-value to be 0.6 W/m²·K. Further, in a case where chemically tempered thin glass sheets of the present invention (silver double-layered Low-E film-attached glass sheet 3 mm (glass sheet on the outdoor side) + argon gas-filled air space 12 mm + glass sheet 1.3 mm + argon gas-filled air space 12 mm + silver double-layered Low-E film-attached glass sheet 1.3 mm (glass sheet on the indoor side)) are used, it is possible to adjust the U-value to be 0.7 W/m²·K. Thus, by using thin chemically tempered glass sheets of the present invention, it is possible to obtain a high heat-insulating performance (high energy-saving effect), as compared with conventional multiple glazing.

Multiple glazing in Reference Examples is common double glazing. Among them, in the case of the double glazing in Ex. 40 wherein the scattering distance is largest in the pendulum impact test, the scattering distance of a fragment of 0.15 g was less than 4.5 m. In the case of multiple glazing in each of Ex. 1, 2, 7, 8, 14 to 16 and 21 to 23 representing preferred Examples of the present invention, scattering of fragments is suppressed to be comparable to the common double glazing. That is, the multiple glazing of the present invention employs thin chemically tempered glass sheets having the prescribed strength, whereby it is provided with a strength equal to a case of employing float glass sheets of 3 mm, and it is possible to present multiple glazing which is light in weight as compared with the conventional double glazing.

### INDUSTRIAL APPLICABILITY

According to the multiple glazing for a building window of the present invention, it is possible to present multiple glazing for a building window which is thin and light in weight and which is capable of suppressing scattering of fragments as much as possible when broken and capable of providing a high energy-saving effect.

The entire disclosure of Japanese Patent Application No. 2013-077556 filed on April 3, 2013 including specification, claims, drawings and summary is incorporated herein by reference in its entirety.

### REFERENCE SYMBOLS

10: multiple glazing for building window, 20, 30, 40: glass sheets, 11, 13: spacers, 12, 14: air spaces, 21a: first main surface, 21b: second main surface, 22: edge

## Claims

1. Multiple glazing for a building window, comprising a plurality of glass sheets and a spacer is placed for the periphery edges of the plurality of glass sheets to form an air space between adjacent glass sheets, wherein among the plurality of glass sheets, a glass sheet arranged on the indoor side has first and second main surfaces and an edge present between the first and second main surfaces, and is a glass sheet having a surface compression stress formed at both of the main surfaces by chemical tempering and having a tensile stress formed inside; said glass sheet has a sheet thickness of from 1.0 to 2.5 mm; the value of said surface compression stress formed at both of the main surfaces is from 400 to 900 MPa; the value of said tensile stress is from 1 to 25 MPa; and the thickness in the sheet thickness direction of the compression stress layer at both of the main surfaces is from 7 to 25 µm.

2. The multiple glazing for a building window according to Claim 1, wherein the thickness of the glass sheet arranged on the indoor side is from 1.2 to 2.2 mm; the value of said surface compression stress is from 600 to 850 MPa; the value of said tensile stress is from 4 to 20 MPa; and the thickness in the sheet thickness direction of the compression stress layer at the main surfaces is from 15 to 25 µm.

3. The multiple glazing for a building window according to Claim 1 or 2, wherein when the multiple glazing for a building window is subjected to a pendulum impact test in accordance with JIS R3206 from the side of said glass sheet arranged on the indoor side, it does not break at a drop height of 10 cm, and when it breaks at a drop height of at least 20 cm, the scattering distance of a fragment exceeding 0.15 g is at most 4.5 m.

4. The multiple glazing for a building window according to any one of Claims 1 to 3, wherein the area of each main surface is at least 5,000 cm².

5. The multiple glazing for a building window according to any one of Claims 1 to 4, wherein said glass sheet arranged on the indoor side is made of glass comprising, as represented by mol percentage based on the following oxides, from 56 to 75% of SiO₂, from 1 to 20% of Al₂O₃, from 8 to 22% of Na₂O, from 0 to 10% of K₂O, from 0 to 14% of MgO, from 0 to 5% of ZrO₂, and from 0 to 10% of CaO.

6. The multiple glazing for a building window according to any one of Claims 1 to 4, wherein said glass sheet arranged on the indoor side is made of glass comprising, as represented by mol percentage based on the following oxides, from 56 to 75% of SiO₂, from 5 to 20% of Al₂O₃, from 8 to 22% of Na₂O, from 0 to 10% of K₂O, from 0 to 14% of MgO, from 0 to 5% of ZrO₂, and from 0 to 5% of CaO.

7. The multiple glazing for a building window according to any one of Claims 1 to 6, wherein the thickness of the air space is from 6 to 16 mm.

8. Multiple glazing for a building window, comprising first, second and third glass sheets, and first and second spacers is placed for the periphery edges of the respective glass sheets to form a first air space between the first and second glass sheets, and a second air space between the second and third glass sheets, wherein the first glass sheet arranged on the indoor side has first and second main surfaces and an edge present between the first and second main surfaces, and is a glass sheet having a surface compression stress formed at both of the main surfaces by chemical tempering and having a tensile stress formed inside; said glass sheet has a sheet thickness of from 1.0 to 2.5 mm; the value of said surface compression stress formed at both of the main surfaces is from 400 to 900 MPa; the value of said tensile stress is from 1 to 25 MPa; and the thickness in the sheet thickness direction of the compression stress layer at both of the main surfaces is from 7 to 25 µm.

9. The multiple glazing for a building window according to Claim 8, wherein the thickness of the first air space and the thickness of the second air space are from 6 to 16 mm.

10. The multiple glazing for a building window according to Claim 9, wherein the thickness of the first air space and the thickness of the second air space are different.

11. The multiple glazing for a building window according to any one of Claims 8 to 10, wherein the sheet thickness of the glass sheet arranged on the indoor side is from 1.2 to 2.2 mm; the value of said surface compression stress is from 600 to 850 MPa; the value of said tensile stress is from 4 to 20 MPa; and the thickness in the sheet thickness direction of the compression stress layer at the main surfaces is from 15 to 25 µm.

12. The multiple glazing for a building window according to any one of Claims 8 to 11, wherein when the multiple glazing for a building window is subjected to a pendulum impact test in accordance with JIS R3206 from the side of said glass sheet arranged on the indoor side, it does not break at a drop height of 10 cm, and when it breaks at a drop height of at least 20 cm, the scattering distance of a fragment exceeding 0.15 g is at most 4.5 m.

13. The multiple glazing for a building window according to any one of Claims 8 to 12, wherein the area of each main surface is at least 5,000 cm².

14. The multiple glazing for a building window according to any one of Claims 8 to 13, wherein the first glass sheet arranged on the indoor side is made of glass comprising, as represented by mol percentage based on the following oxides, from 56 to 75% of SiO₂, from 1 to 20% of Al₂O₃, from 8 to 22% of Na₂O, from 0 to 10% of K₂O, from 0 to 14% of MgO, from 0 to 5% of ZrO₂, and from 0 to 10% of CaO.

15. The multiple glazing for a building window according to any one of Claims 8 to 13, wherein the first glass sheet arranged on the indoor side is made of glass comprising, as represented by mol percentage based on the following oxides, from 56 to 75% of SiO₂, from 5 to 20% of Al₂O₃, from 8 to 22% of Na₂O, from 0 to 10% of K₂O, from 0 to 14% of MgO, from 0 to 5% of ZrO₂, and from 0 to 5% of CaO.
